# EUROPEAN PATENT APPLICATION

(11) **EP 2 604 360 A2**
(43) Date of publication of application: **19.06.2013**
(21) Application number: 12195297.2
(22) Date of filing: 03.12.2012
(51) Int. Cl.: B21J 5/12

(54) **Heat exchanger with fins and method for forming same**

(30) Priority: 12.12.2011 US 201113316846
(71) Applicant: Unison Industries LLC, Jacksonville, FL 32256 (US)
(72) Inventor: Peoples, Michael Dean, Dayton, OH Ohio 45434 (US); Myers, Steven Franklin, Dayton, OH Ohio 45434 (US)
(74) Representative: Williams, Andrew Richard

(57) **Abstract**

A heat exchanger (10) having a metal body (12) with a plurality of fluid passages (14) extending through the metal body (12), and a plurality of fins (30) skived from the upper surface (16) of the metal body (12) and a method of forming the plurality of fins (30) in the metal body (12) of the heat exchanger (10).

## Description

### BACKGROUND OF THE INVENTION

Heat exchangers provide a way to transfer heat from one medium to another. Heat exchanges may have fluid passages within the heat exchanger and fins formed on a surface of the heat exchanger. Generally, heat from fluid within the fluid passages may be dissipated through the fins to the environment surrounding the fins. Skiving is an efficient process that may be used to produce a series of very fine fins on the heat exchanger from the metal body forming a portion of the heat exchanger. Because the fins are essentially metal skived from the metal body of the heat exchanger they may have very sharp edges that may make handling and assembling the heat exchanger difficult.

### BRIEF DESCRIPTION OF THE INVENTION

In one embodiment, a method of forming fins in a heat exchanger having a metal body through which fluid cooling passages pass includes skiving the metal body to form a plurality of fins, with each fin having a body terminating in a tip, and shaping the fins to orient the tips laterally whereby the tips, which may be sharp from skiving, are less likely to be contacted during handling.

In another embodiment, a heat exchanger includes a metal body having an upper surface, a plurality of fluid passages extending through the metal body, and a plurality of curled fins skived from the upper surface, with each curled fin having a body and a laterally extending tip.

### BRIEF DESCRIPTION OF THE DRAWINGS

In the drawings:
Figure 1 is a perspective view illustrating a heat exchanger having fins formed according to prior art methods;
Figure 2 is a schematic perspective view of a portion of a metal body forming a heat exchanger with curled fins formed in a surface of the metal body according to an embodiment of the invention; and
Figure 3 is a schematic side view of the metal body of Figure 2 with rows of curled fins formed according to another embodiment of the invention.

### DESCRIPTION OF EMBODIMENTS OF THE INVENTION

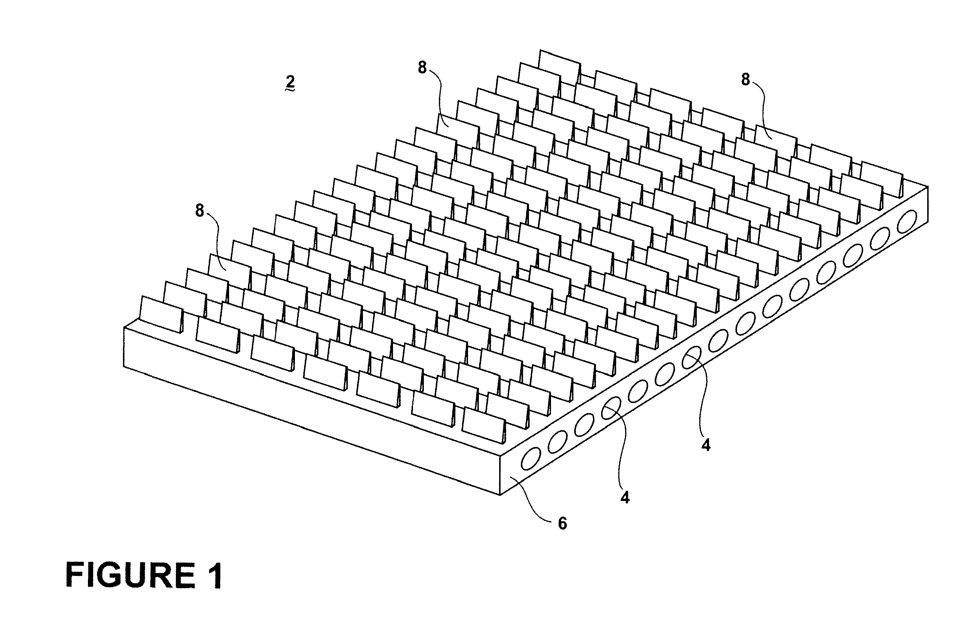

Figure 1 illustrates a schematic example of a heat exchanger portion 2 having fluid passages 4, which may be used for carrying fluid in a main body 6 of the heat exchanger portion 2 and fins 8 formed according to current skiving techniques and over which cooling air may be passed to transfer heat from the fins 8 to the surrounding air. While the fluid passages 4 are illustrated as being parallel with the fins 8 it will be understood that the fluid passages may be orientated in any direction within the heat exchanger portion 2 and with respect to the fins 8. The skiving process uses a sharp blade (not shown) to shave the metal fins 8 from the main body 6 of the heat exchanger portion 2. Such metal fins 8 are generally straight, rigid, sharp, and cover entire surfaces of the heat exchanger portion 2 and may make handling and assembling the heat exchanger portions 2 dangerous or difficult.

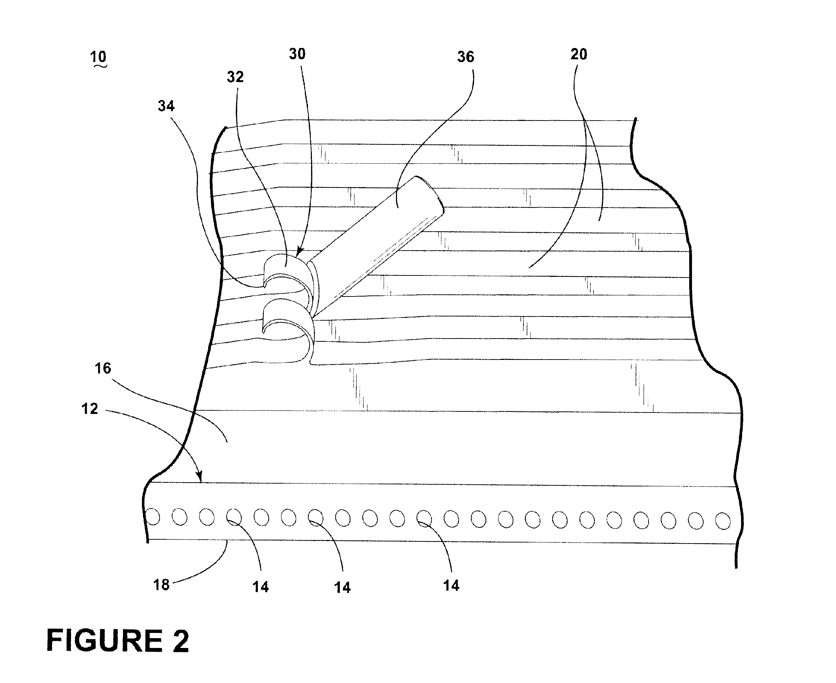

The embodiments of the invention allow for the formation of a heat exchanger having a plurality of curled fins skived from the metal body of the heat exchanger, which may result in a variety of benefits including easier handling of the heat exchanger. Figure 2 illustrates a portion of a heat exchanger 10 having a metal body 12 with fluid cooling passages 14. The passages 14 may extend through the metal body 12 and may be coupled to appropriate headers such that fluid may be passed there through. The metal body 12 may include a first surface shown as an upper surface 16 and a second surface shown as a lower surface 18, which opposes the upper surface 16. It will be understood that the orientation of the metal body 12 may be changed such that the first and second surfaces may correlate to the lower and upper surfaces without detracting from the description herein.

While the metal body 12 does not need to have them, multiple projections 20 may be included in the metal body 12 and may from a portion of the upper surface 16. Any number of multiple projections 20 may be formed and the multiple projections 20 may take a variety of shapes and sizes including that the widths of the multiple projections 20 and their spacing may be varied. Such multiple projections 20 may be formed in any suitable manner including by way of non-limiting examples that the multiple projections 20 may be ridges machined from metal base stock forming the metal body 12 and that the multiple projections 20 may be brazed to the metal body 12.

Regardless of the presence of the multiple projections 20, a method of forming fins on the heat exchanger 10 may include skiving the metal body 12 to form a plurality of fins 30, with each fin 30 having a body 32 terminating in a tip 34 and shaping the fins 30 to orient the tips 34 laterally. More specifically, a skiving blade 36 may be introduced to the upper surface 16 of the metal body 12, including the multiple projections 20 if they are included in the metal body 12, and the skiving blade 36 may be advanced into the metal body 12 such that the body 32 of the fin 30 is formed and the skiving blade 36 shapes the fin 30 as it is formed to orient the tip 34 so that it extends laterally. More specifically, as the skiving blade 36 shaves the fin 30 from the metal body 12 it curls the fin 30. The skiving blade 36 may continue to shave and shape the fin 30 until the tip 34 is oriented laterally with the upper surface 16. Again, while the passages 14 are illustrated as being parallel with the fins 30, it will be understood that the passages 14 may be orientated in any direction within the heat exchanger 10 and with respect to the fins 30 including that the passages 14 may be in an orientation that is perpendicular to the illustrated orientation.

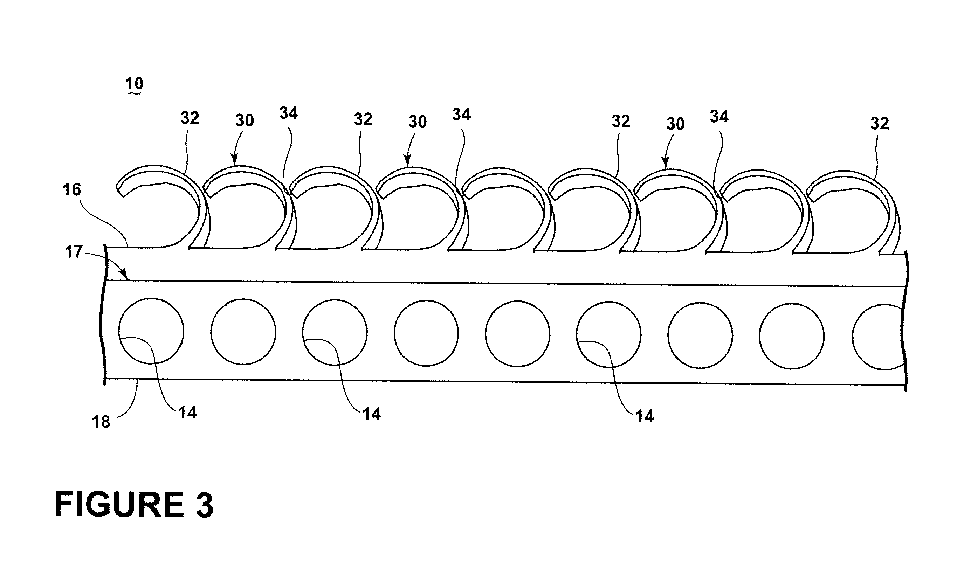

As illustrated, the fin 30 remains attached to the metal body 12 and the process of forming such a fin 30 may be repeated on the metal body 12 until a plurality of fins 30 are formed on the metal body 12. It is contemplated that forming the plurality of fins 30 may include forming the plurality of fins 30 in rows. For example, two fins 30 are illustrated as forming a row along two of the multiple projections 20. As illustrated in Figure 3, the fins 30 may also be formed along the length of the metal body 12. In this manner, the tips 34 of the fins 30 in one row may be adjacent the body 32 of the fins 30 in the next row. It is contemplated that this may include that the tips 34 of the fins 30 in the one row contact or abut the body 32 of the fins 30 in the next row or that the tips 34 may be slightly spaced from the body 32 of the fins 30 in the next row. In either case, the tips 34 of the fins 30 are less likely to be contacted during handling and the tips 34 and the bodies 32 collectively form an undulating surface.

The skiving process may be done in any suitable manner including that the skiving blade 36 may be suitably coupled to a machine which may exert a force on the skiving blade 36 as it is driven into the upper surface 16 of the metal body 12. After the fins 30 have been formed the metal body 12 may be trimmed in any suitable way such that at least a section of a heat exchanger may be formed. The section of heat exchanger formed may include the fluid passages 14 and the fins 30 and may be orientated, shaped, and combined in any suitable manner with additional sections of any suitable shape and size such that a heat exchanger or heat exchanger assembly of varying proportions may be made and may be used with a variety of different heat transfer applications. During operation, fluid may be passed through the fluid passages 14 and heat from the fluid may be dissipated through the fins 30 to the air flowing by the fins 30.

While the body 32 of each of the plurality of fins 30 has been illustrated as having an arcuate cross section other shapes may be achieved through skiving and may result in the tips 34 being oriented laterally. Further, while the skiving blade 36 is illustrated as being at a particular lead in angle with respect to the metal body 12 and having a particular cut depth into the upper surface 16, it is contemplated that this is for illustrative purpose only and that the angle and cut depth may be varied to achieve fins 30 having various attributes and dimensions. It will be understood that such varying angles and cut depths may still result in the tip 34 of the fin 30 being oriented such that the tip 34, which may be sharp from skiving, is less likely to be contacted during handling. Shaping the fins 30 to orient the tips laterally may be done by controlling at least one aspect of the skiving to curl the fins 30 as they are formed. For example, the lead in angle and cut depth have been described as being controllable to shape the fin. By way of further non-limiting examples, a stroke length of the skiving blade 36 during the skiving may be controlled, the applied pressure of the skiving blade 36 during the skiving may be controlled, and/or the geometry of the skiving blade 36 may be controlled.

The above described embodiments provide for a variety of benefits including that curled fins may be made by skiving, which is an affordable and reliable method of producing fins on a heat exchanger and a less expensive method then folding and extruding such pieces. The above described embodiments allow for fins to be created with the size and uniformity desired and may result in heat transfer advantages. For example, the fins may be arranged to increase the amount of surface area while admitting ample airflow for cooling. The fins may also be longer allowing for greater heat dissipation. Further, the curled fins may result in a heat exchanger that is easier to handle and does not require the use of gloves or other protective gear. Further, the curled fins may also result in the heat exchanger having greater impact resistance as the fins may have improved robustness due to their shape.

This written description uses examples to disclose the invention, including the best mode, and also to enable any person skilled in the art to practice the invention, including making and using any devices or systems and performing any incorporated methods. The patentable scope of the invention is defined by the claims, and may include other examples that occur to those skilled in the art. Such other examples are intended to be within the scope of the claims if they have structural elements that do not differ from the literal language of the claims, or if they include equivalent structural elements with insubstantial differences from the literal languages of the claims.

## Claims

1. A method of forming fins (30) in a heat exchanger (10) having a metal body (12) through which fluid cooling passages (14) pass, the method comprising:
skiving the metal body (12) to form a plurality of fins (30), with each fin (30) having a body (32) terminating in a tip (34); and
shaping the fins (30) to orient the tips laterally (34);
whereby the tips (34), which may be sharp from skiving, are less likely to be contacted during handling.

2. The method of claim 1, wherein the forming a plurality of fins (30) comprises forming the plurality of fins in rows.

3. The method of claim 2, wherein the tips (34) of the fins (30) in one row are adjacent the body (32) of the fins (30) in the next row.

4. The method of claim 3, wherein the tips (34) of the fins (30) in the one row contact the body (32) of the fins (30) in the next row.

5. The method of any preceding claim, wherein at least the body (32) of each of the plurality of fins (30) has an arcuate cross section.

6. The method of claim 5, wherein the shaping the fins (30) comprises controlling at least one aspect of the skiving to curl the fins (30) as they are formed.

7. The method of claim 6, wherein the controlling the at least one aspect of the skiving comprises controlling a stroke length of a blade (36) during the skiving.

8. The method of claim 7, wherein the controlling the at least one aspect of the skiving comprises controlling a geometry of the blade (36).

9. The method of claim 1, wherein the shaping the fins (30) comprises controlling at least one aspect of the skiving.

10. The method of claim 9, wherein the controlling the at least one aspect of the skiving comprises controlling at least one of an applied pressure and a stroke length of a blade (36) during the skiving.

11. The method of claim 10, wherein the controlling the at least one aspect of the skiving comprises controlling a geometry of the blade (36).

12. A heat exchanger (10) comprising:
a metal body (12) having an upper surface (16);
a plurality of fluid passages (14) extending through the metal body (12); and
a plurality of curled fins (30) skived from the upper surface (16), with each curled fin having a body (32) and a laterally extending tip (34).

13. The heat exchanger (10) of claim 12, wherein the plurality of curled fins (30) are arranged in rows.

14. The heat exchanger of claim 13, wherein the tips (34) in one row are adjacent the bodies of the next row and collectively form an undulating surface.

15. The heat exchanger of claim 14, wherein the tips (34) in one row abut the bodies (32) of the next row.
